# EUROPEAN PATENT SPECIFICATION

(11) **EP 2 974 919 B1**
(45) Date of publication and mention of the grant of the patent: **21.03.2018**
(21) Application number: 15172275.8
(22) Date of filing: 16.06.2015
(51) Int. Cl.: B60S 1/40, B60S 1/38

(54) **CONNECTING DEVICE BETWEEN A WIPER ARM AND A WIPER BLADE**
VERBINDUNGSVORRICHTUNG ZWISCHEN EINEM WISCHERARM UND EINEM WISCHERBLATT
DISPOSITIF DE RACCORDEMENT ENTRE UN BRAS D'ESSUIE-GLACE ET UN BALAI D'ESSUIE-GLACE

(30) Priority: 17.07.2014 DE 102014110063
(43) Date of publication of application: 20.01.2016
(73) Proprietor: Valeo Systèmes d'Essuyage, 78322 Le Mesnil Saint Denis (FR)
(72) Inventor: SCHAEUBLE, Michael, 71665 VAIHINGEN/ENZ (DE)
(74) Representative: Callu Danseux, Violaine

(56) References cited:
- EP-A2- 1 816 043
- DE-A1-102012 102 912
- FR-A1- 2 886 254

## Description

### Prior Art

The invention relates to a connecting device between a wiper arm and a wiper blade according to the precharacterizing clause of the two independent claims.

A connecting device according to the precharacterizing clause of the two independent claims is known from FR 2 886 254 A1. In the known connecting device, a spoiler- or lip-like element is arranged in the connection region between a wiper arm and a wiper blade on the upper side of the connection region of the wiper arm, said spoiler- or lip-like element serving to increase the contact pressure of the wiper arm, and therefore also of the wiper blade connected to the wiper arm, depending on the driving speed. Although the spoiler element known from the document mentioned has a high aerodynamic effect, depending on the specific configuration or shaping, the height of the wiper device is, however, increased in the connection region of the wiper arm, which may be of disadvantage depending on the installed position of the wiper arm on the motor vehicle. Furthermore, it is likewise known from the document mentioned to use, in the region of the wiper blade, spoiler-like caps which are arranged on the upper side of the wiper blade. However, just using spoiler-like caps of this type in the region of the wiper blade does not bring about any increase in the contact force in the connection region between the wiper arm and the wiper blade. The contact force which is reduced in comparison to the regions with the spoiler-like caps on the wiper blade can be increased by the spoiler element arranged in the region of the wiper arm in the connection region between the wiper blade and the wiper arm such that it is possible to obtain an at least substantially equally sized, speed-dependent contact force of the wiper blade against the vehicle window over the entire length of the wiper blade.

### Summary of the Invention

Starting from the depicted prior art, the invention is based on the object of developing a connecting device between a wiper arm and a wiper blade according to the precharacterizing clause of the two independent claims in such a manner that in particular the overall height of the wiper arm is not increased in the connection region to the wiper blade. This object is achieved according to the invention in a connecting device between a wiper arm and a wiper blade with the features of the two independent claims.

In a first structural realization of the inventive concept, it is provided that the first spoiler element (in the connection region between the wiper arm and the wiper blade) is constructed as part of a lateral boundary surface of the mount of the wiper arm by a flat partial region of the lateral boundary surface of the mount positioned obliquely with respect to an onflow direction of the airstream, and that the angle of the partial region serving as first spoiler element is between 30° and 60°, preferably approximately 45°, in relation to a plane running parallel to the upper boundary surface of the mount. In other words, this means that a partial region of the connection region between the wiper arm and the wiper blade is constructed as a spoiler element in the region of the mount, and therefore the overall height of the mount and of the wiper arm is not increased in the connection region.

In an alternative structural configuration of the inventive concept, it is provided that the first spoiler element is constructed as part of a lateral boundary surface of the mount of the wiper arm by a flat partial region of the lateral boundary surface positioned obliquely with respect to an onflow direction of the air stream, and that the obliquely positioned partial region of the lateral boundary surface is arranged on the side facing the upper boundary surface, wherein the height of the partial region in relation to the height of the mount is between 20% and 80%, preferably approximately 50% of the height of the mount. In other words, this structural realization of the invention includes a large range of conceivable angles of a surface which is positioned obliquely with respect to the airstream and acts as a wind-deflecting surface, wherein it is essential merely that a certain height of the partial region or of the aerodynamically effective surface is available in order to obtain the required contact pressure.

Advantageous developments of the two connecting devices according to the invention between a wiper arm and a wiper blade are stated in the dependent claims. All combinations of at least two of the features disclosed in the claims, the description and/or in the figures fall within the scope of the invention.

In a particularly preferred structural development of the second alternative configuration of the invention, the angle of the partial region serving as first spoiler element is between 30° and 60°, preferably approximately 45°, in relation to a plane running parallel to the upper boundary surface.

In order, firstly, to make it possible for an operator to exchange the wiper blade on the wiper arm as simply as possible and in order, secondly, to optimize the aerodynamic effect of the first spoiler element as far as possible, it is proposed that on the adapter element at least a first detent element is constructed, which forms a detent connection together with a second detent element on the wiper arm, and that the partial region which forms a spoiler element extends up to the area of the second detent element with respect to a longitudinal direction of the mount.

In order to optimize the contact force in the region of the wiper blade, it is furthermore of advantage if the wiper blade body has on its upper side a second spoiler element, which runs at least substantially over the entire length of the wiper blade body, wherein in the region of the adapter element the second spoiler element is constructed so as to be interrupted or is overlapped by the adapter element.

In order to optimize the mechanical connection between the wiper blade and the wiper arm in the connection region, it is provided that the adapter element of the wiper blade in the region of the mount of the wiper arm has side surfaces, which are adapted to the shape of the upper boundary surface and of two lateral boundary surfaces of the wiper arm such that a form-fitting connection is formed, at least in parts, between the side surfaces of the adapter element and the upper boundary surface of the adapter element and the two lateral boundary surfaces of the mount of the wiper arm.

In a further configuration of the invention, the partial region serving as first spoiler element is arranged only on one lateral boundary surface of the mount. However, in an alternative configuration, it may also be provided that the partial region of the mount serving as first spoiler element is arranged on both lateral boundary surfaces of the mount, and that the two lateral boundary surfaces are constructed identically.

A detent connection, which is actuable intuitively for an operator, for releasing the wiper blade from, or mounting same on, the wiper arm is obtained if the second detent element is constructed in the form of an aperture in the upper boundary surface of the mount of the wiper arm. Depending on the structural configuration of the mount, it is possible here for the first detent element to be arranged flush to the wiper lip plane, or else for the first adapter element to be arranged laterally offset to the wiper lip plane, wherein the width of the upper boundary surface is between 25% and 70% of the width of the mount.

Further advantages, features and details of the invention emerge from the description bellow of preferred exemplary embodiments and with reference to the drawing.

In the drawing:
- Fig. 1: shows a perspective illustration of a wiper device for cleaning a vehicle window, together with a partial region of a wiper arm and a wiper blade fastened to the wiper arm with the use of a connecting device according to the invention,
- Fig. 2: shows a perspective illustration of the components of the wiper device according to fig. 1 in a state separated from one another,
- Fig. 3: shows a section, as seen perpendicularly to the longitudinal axis of the wiper blade, through the connecting device between the wiper arm and the wiper blade with a symmetrical configuration of the mount on the wiper arm,
- Fig. 4: shows a cross section through the region of the connecting device between the wiper arm and the wiper blade with an asymmetrical construction of the mount on the wiper arm, likewise as seen perpendicularly to the longitudinal axis of the wiper blade,
- Fig. 5: shows a cross section through a connecting arrangement modified in comparison to fig. 4,
- Fig. 6: shows a perspective illustration of a connecting arrangement between the wiper arm and the wiper blade with the use of spoiler-like elements in the region of the wiper blade, and
- Fig. 7: shows a cross section, as seen perpendicularly to the longitudinal axis of the wiper blade, through the connecting arrangement according to fig. 6 in the mounted state.

Identical elements and elements having the same function are provided with the same reference signs in the figures.

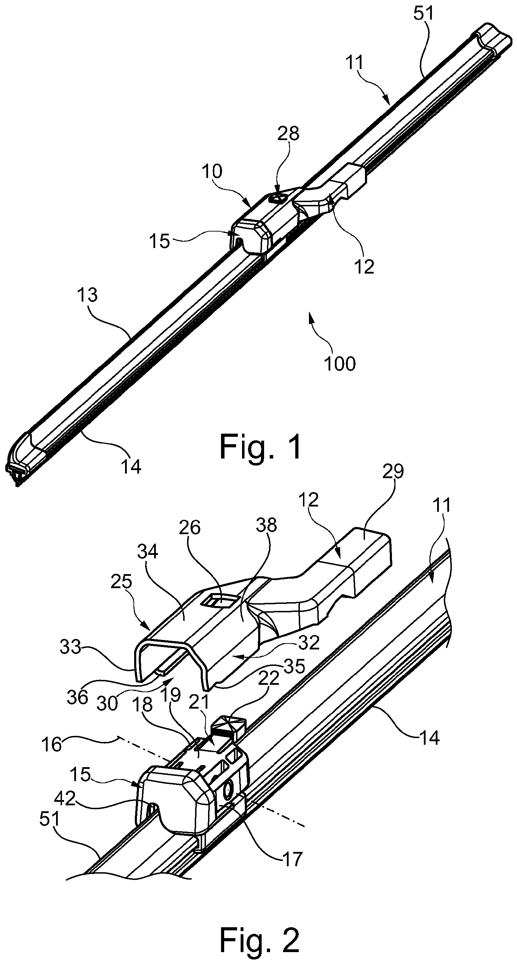

Fig. 1 illustrates a wiper device 100 for cleaning a vehicle window, preferably a vehicle windscreen. The wiper device 100 comprises a wiper blade 11 which is fastened exchangeably to a wiper arm 12 via a connecting device 10 according to the invention. According to the illustration in fig. 1, the wiper blade 11 has an elongated wiper blade body 13 with a wiper lip 14 which is designed to bear against the vehicle window (not illustrated). An adapter element 15 which is at least partially composed of plastic is arranged preferably in the central region of the wiper blade body 13. The adapter element 15 customarily consists of two elements (not illustrated specifically) which are arranged movably with respect to each other about a pivot axis 16 (fig. 2) in order, during the movement of the wiper blade 11 along the vehicle window, allays to permit uniform contact of the wiper lip 14 over the full surface area on the vehicle window.

The adapter element 15, which is of approximately block-shaped design, has side surfaces 17, 18 and an upper side 19 on mutually opposite sides which run parallel to the longitudinal direction of the wiper blade body 13. Furthermore, a first detent element 22 in the form of an actuating button is arranged on the adapter element 15 via a spring tongue 21 on the side facing the wiper arm 12. The first detent element 22 forms a detent connection 28 together with a second detent element 26 which is arranged in a connection region 25 of the wiper arm 12 to the adapter element 15 and is in the form of an aperture.

The connection region 25 of the wiper arm 12 is arranged laterally offset to a connecting section 29, which is connected to the drive of the wiper arm 12 (wiper shaft). The wiper arm 12 is preferably composed of sheet metal and is constructed as a punched/bent part. The connection region 25 has a substantially U-shaped cross section and is constructed to be open on the side facing the adapter element 15 in order to be able to push the adapter element 15 into or pull same out of a mount 30 which is formed by the connection region 25, in order to permit an exchange of the wiper blade 11 in the event of a service. The mount 30 of the connection region 25 is substantially formed by two lateral boundary surfaces 32, 33 and an upper boundary surface 34. The second detent element 26 in the form of the aperture discussed is also arranged in the region of the upper boundary surface 34. The boundary surfaces 32 to 34 of the mount 30 are adapted to the external cross section of the adapter element 15 in such a manner that a form-fitting connection is formed, at least in parts, between the boundary surfaces 32 to 34 of the mount 30 and the side surfaces 17, 18 and the upper side 19 of the adapter element 15. Furthermore, holding sections 35, 36 can be seen on the two boundary surfaces 32, 33, on the side facing away from the upper boundary surface 34, said holding sections 35, 36 also projecting inwards by 90° into the region of the mount 30 and positioning or holding the adapter element 15, and therefore also the wiper blade 11, in a perpendicular direction to the extent of the wiper arm 12 within the mount 30.

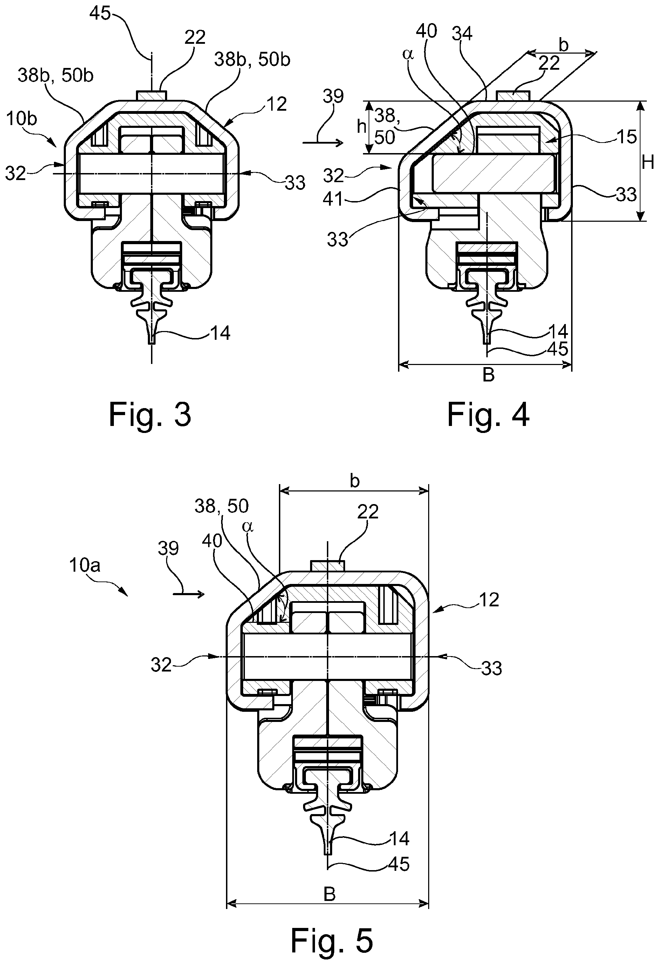

According to the illustration in figs. 1, 2 and 4, it is provided according to the invention that the boundary surface 32 of the mount 30 of the wiper arm 12 has a partial region 38 which is arranged obliquely by an angle α in relation to the main onflow direction of the airstream, the direction of which is indicated by the arrow 39. The angle α of the partial region 38, which is of flat design, is between 30° and 60°, preferably approximately 45°, in relation to a plane 40 running parallel to the upper boundary surface 34 (fig. 4). The partial region 38 merges on one side into the upper boundary surface 34 and on the other side into a further partial region 41 which is arranged perpendicularly to the main onflow direction of the airstream (arrow 39), wherein the latter partial region 41 is arranged parallel to the boundary surface 33 of the mount 30. The height h of the partial region 38 in relation to the height H of the mount 30 is between 20% and 80%, preferably approximately 50% of the height H of the mount 30. Furthermore, the width b of the upper boundary surface 34 of the mount 30 or of the connection region 25 is between 25% and 70% of the width B of the connection region 25. Furthermore, fig. 4 illustrates a wiper lip plane 45 which coincides here with the plane of symmetry of the wiper lip, wherein the two detent elements 22, 26 are arranged laterally offset, i.e. not in alignment or asymmetrically with respect to the wiper lip plane 45. The partial region 38 of the boundary surface 32 forms a first spoiler element 50 which serves to increase the contact pressure of the wiper arm 1 in the direction of the vehicle window, and therefore also the contact pressure of the wiper blade 11, depending on the driving speed of the vehicle.

The wiper blade 11 preferably has a second spoiler element 51 which is arranged in the form of a lip-like elevation on the upper side of the wiper blade body 13, as can be seen in particular with reference to figs. 1 and 2. The second spoiler element 51 can be constructed as a continuous, second spoiler element 51 which is formed over the entire length of the wiper blade body 13, for which purpose the adapter element 15 has a corresponding recess 42, or else in the form of two partial elements which are arranged on both sides of the adapter element 15.

The connecting device 10a illustrated in fig. 5 differs from the connecting device 10 in that the two detent elements 22, 26 are arranged flush or symmetrically to the wiper lip plane 45.

In the case of the connecting arrangement 10b according to fig. 3, it is provided that the two boundary surfaces 32, 33 have a partial region 38b which is constructed as first spoiler element 50b in a manner corresponding to the partial region 38 of the connecting devices 10, 10a. Furthermore, the two detent elements 22, 26 are also arranged symmetrically to the wiper lip plane 45 or are flush thereto.

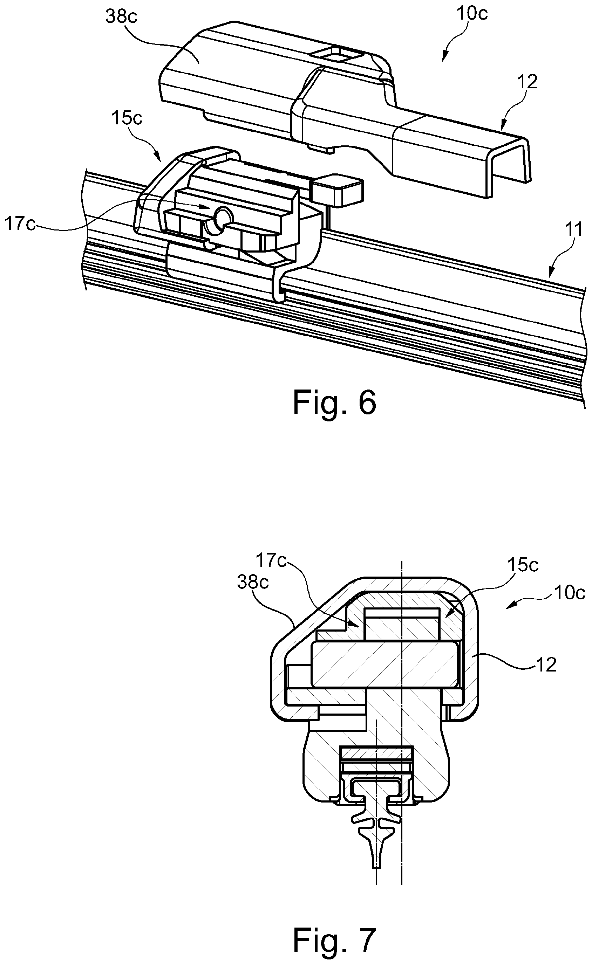

Finally, figs. 6 and 7 illustrate a connecting device 10c which differs from the connecting device 10 in that the adapter element 15c has, in the partial region 38c, a side surface 17c which is of step-shaped design and, when the wiper blade 11 is mounted, bears in a planar or linear manner only in partial sections in operative connection with the inner side of the partial region 38c (fig. 7).

The connecting device 10, 10a, 10b, 10c described to this extent can be modified in diverse ways without departing from the inventive concept.

### List of Reference Signs

- 10, 10a, 10b, 10c: Connecting device
- 11: Wiper blade
- 12: Wiper arm
- 13: Wiper blade body
- 14: Wiper lip
- 15,15c: Adapter element
- 16: Pivot axis
- 17,17c: Side surface
- 18: Side surface
- 19: Upper side
- 21: Spring tongue
- 22: Detent element
- 25: Connection region
- 26: Detent element
- 28: Detent connection
- 29: Connecting section
- 30: Mount
- 32: Boundary surface
- 33: Boundary surface
- 34: Boundary surface
- 35: Holding section
- 36: Holding section
- 38,38b,38c: Partial region
- 39: Arrow
- 40: Plane
- 41: Partial region
- 42: Recess
- 45: Wiper lip plane
- 50,50b: Spoiler element
- 51: Spoiler element
- 100: Wiper device

- α: Angle
- h: Height
- H: Height
- b: Width
- B: Width

## Claims

1. Connecting device (10; 10a; 10b; 10c) between a wiper arm (12) and a wiper blade (11), wherein the wiper blade (11) has an elongated wiper blade body (13) with an adapter element (15; 15c) which serves for exchangeable connecting to a connection region (25) of the wiper arm (12), wherein the connection region (25) of the wiper arm (12) has a substantially U-shaped mount (30) for the adapter element (15; 15c) with an upper boundary surface (34) and two lateral boundary surfaces (32, 33), wherein the mount (30) overlaps the adapter element (15; 15c) at least in the region of the boundary surfaces (32 to 34), and with a first spoiler element (50; 50b) constructed in the connection region (25) of the wiper arm (12) for increasing the aerodynamic contact pressure of the wiper arm (12) onto the wiper blade (11),
**characterized in that**
the first spoiler element (50; 50b) is constructed as part of a lateral boundary surface (32, 33) of the mount (30) of the wiper arm (12) by a flat partial region (38; 38b; 38c) of the lateral boundary surface (32, 33) positioned obliquely with respect to an onflow direction of the airstream, and **in that** the angle (α) of the partial region (38; 38b; 38c) serving as first spoiler element (50; 50b) is between 30° and 60°, preferably approximately 45°, in relation to a plane (40) running parallel to the upper boundary surface (34).

2. Connecting device (10; 10a; 10b; 10c) between a wiper arm (12) and a wiper blade (11), wherein the wiper blade (11) has an elongated wiper blade body (13) with an adapter element (15; 15c) which serves for exchangeable connecting to a connection region (25) of the wiper arm (12), wherein the connection region (25) of the wiper arm (12) has a substantially U-shaped mount (30) for the adapter element (15; 15c) with an upper boundary surface (34) and two lateral boundary surfaces (32, 33), wherein the mount (30) overlaps the adapter element (15; 15c) at least in the region of the boundary surfaces (32 to 34), and with a first spoiler element (50; 50b) constructed in the connection region (25) of the wiper arm (12) for increasing the aerodynamic contact pressure of the wiper arm (12) onto the wiper blade (11),
**characterized in that**
the first spoiler element (50; 50b) is constructed as part of a lateral boundary surface (32, 33) of the mount (30) of the wiper arm (12) by a flat partial region (38; 38b; 38c) of the lateral boundary surface (32, 33) positioned obliquely with respect to an onflow direction of the airstream, and **in that** the obliquely positioned partial region (38; 38b; 38c) of the lateral boundary surface (32, 33) is arranged on the side facing the upper boundary surface (34), wherein the height (h) of the partial region (38; 38b; 38c) in relation to the height (H) of the mount (30) is between 20% and 80%, preferably approximately 50% of the height (H) of the mount (30).

3. Connecting device according to Claim 2,
**characterized in that**
the angle (α) of the partial region (38; 38b; 38c) serving as first spoiler element (50; 50b) is between 30° and 60°, preferably approximately 45°, in relation to a plane (40) running parallel to the upper boundary surface (34).

4. Connecting device according to one of Claims 1 to 3,
**characterized in that**
on the adapter element (15; 15c) at least a first detent element (22) is constructed, which forms a detent connection (28) together with a second detent element (26) on the wiper arm (12), and **in that** the partial region (38; 38b; 38c) extends up to the area of the second detent element (26) with respect to a longitudinal direction of the mount (30).

5. Connecting device according to one of Claims 1 to 4,
**characterized in that**
the wiper blade body (13) has on its upper side a second spoiler element (51), which runs at least substantially over the entire length of the wiper blade body (13), wherein in the region of the adapter element (15; 15c) the second spoiler element (51) is constructed so as to be interrupted or is overlapped by the adapter element (15; 15c).

6. Connecting device according to one of Claims 1 to 5,
**characterized in that**
the adapter element (15; 15c) of the wiper blade (11) in the region of the mount (30) of the wiper arm (12) has boundary surfaces (17; 17c, 18, 19), which are adapted to the shape of the upper boundary surface (34) and of the two lateral boundary surfaces (32, 33) of the wiper arm (12) such that a form-fitting connection is formed, at least in parts, between the boundary surfaces (17; 17c, 18, 19) of the adapter element (15; 15c) and the upper boundary surface (34) and the two lateral boundary surfaces (32, 33) of the wiper arm (12).

7. Connecting device according to one of Claims 1 to 6,
**characterized in that**
the partial region (38; 38c) serving as first spoiler element (50) is arranged only on one lateral boundary surface (32).

8. Connecting device according to one of Claims 1 to 6,
**characterized in that**
the partial region (38b) serving as first spoiler element (50b) is arranged on both lateral boundary surfaces (32, 33), and **in that** the two lateral boundary surfaces (32, 33) are constructed identically.

9. Connecting device according to Claim 4,
**characterized in that**
the second detent element (26) is constructed in the form of an aperture in the upper boundary surface (34) of the mount (30) of the wiper arm (12).

10. Connecting device according to Claim 4 or Claim 9,
**characterized in that**
the first detent element (22) is arranged flush to a wiper lip plane (45).

11. Connecting device according to one of Claims 4 or 9,
**characterized in that**
the first detent element (22) is arranged laterally offset to a wiper lip plane (45).

12. Connecting device according to one of Claims 1 to 11,
**characterized in that**
the width (b) of the upper boundary surface (34) is between 25% and 70% of the width (B) of the mount (30).

## Patentansprüche

1. Verbindungseinrichtung (10; 10a; 10b; 10c) zwischen einem Wischarm (12) und einem Wischblatt (11), wobei das Wischblatt (11) einen langgestreckten Wischblattkörper (13) mit einem Adapterelement (15; 15c) aufweist, das zum austauschbaren Verbinden an einem Verbindungsbereich (25) des Wischarms (12) dient, wobei der Verbindungsbereich (25) des Wischarms (12) eine im Wesentlichen U-förmige Aufnahme (30) für das Adapterelement (15; 15c) mit einer oberen Begrenzungsfläche (34) und zwei seitlichen Begrenzungsflächen (32, 33) aufweist, wobei die Aufnahme (30) das Adapterelement (15; 15c) zumindest im Bereich der Begrenzungsflächen (32 bis 34) überdeckt, sowie mit einem im Verbindungsbereich (25) des Wischarms (12) ausgebildeten ersten Spoilerelement (50; 50b) zur Erhöhung des aerodynamischen Anpressdrucks des Wischarms (12) auf das Wischblatt (11),
**dadurch gekennzeichnet,**
**dass** das erste Spoilerelement (50; 50b) als Teil einer seitlichen Begrenzungsfläche (32, 33) der Aufnahme (30) des Wischarms (12) durch einen gegenüber einer Anströmrichtung des Fahrtwindes schräg angestellten, ebenen Teilbereich (38; 38b; 38c) der seitlichen Begrenzungsfläche (32, 33) ausgebildet ist, und dass der Winkel (α) des als erstes Spoilerelement (50; 50b) dienenden Teilbereichs (38; 38b; 38c) zwischen 30° und 60°, vorzugsweise etwa 45°, bezogen auf eine parallel zur oberen Begrenzungsfläche (34) verlaufende Ebene (40) beträgt.

2. Verbindungseinrichtung (10; 10a; 10b; 10c) zwischen einem Wischarm (12) und einem Wischblatt (11), wobei das Wischblatt (11) einen langgestreckten Wischblattkörper (13) mit einem Adapterelement (15; 15c) aufweist, das zum austauschbaren Verbinden an einem Verbindungsbereich (25) des Wischarms (12) dient, wobei der Verbindungsbereich (25) des Wischarms (12) eine im Wesentlichen U-förmige Aufnahme (30) für das Adapterelement (15; 15c) mit einer oberen Begrenzungsfläche (34) und zwei seitlichen Begrenzungsflächen (32, 33) aufweist, wobei die Aufnahme (30) das Adapterelement (15; 15c) zumindest im Bereich der Begrenzungsflächen (32 bis 34) überdeckt, sowie mit einem im Verbindungsbereich (25) des Wischarms (12) ausgebildeten ersten Spoilerelement (50; 50b) zur Erhöhung des aerodynamischen Anpressdrucks des Wischarms (12) auf das Wischblatt (11),
**dadurch gekennzeichnet,**
**dass** das erste Spoilerelement (50; 50b) als Teil einer seitlichen Begrenzungsfläche (32, 33) der Aufnahme (30) des Wischarms (12) durch einen gegenüber einer Anströmrichtung des Fahrtwindes schräg angestellten, ebenen Teilbereich (38; 38b; 38c) der seitlichen Begrenzungsfläche (32, 33) ausgebildet ist, und dass der schräg angestellte Teilbereich (38; 38b; 38c) der seitlichen Begrenzungsfläche (32, 33) auf der der oberen Begrenzungsfläche (34) zugewandten Seite angeordnet ist, wobei die Höhe (h) des Teilbereichs (38; 38b; 38c), bezogen auf die Höhe (H) der Aufnahme (30) zwischen 20% und 80%, vorzugsweise etwa 50% der Höhe (H) der Aufnahme (30) beträgt.

3. Verbindungseinrichtung nach Anspruch 2,
**dadurch gekennzeichnet,**
**dass** der Winkel (α) des als erstes Spoilerelements (50; 50b) dienenden Teilbereichs (38; 38b; 38c) zwischen 30° und 60°, vorzugsweise etwa 45°, bezogen auf eine parallel zur oberen Begrenzungsfläche (34) verlaufende Ebene (40) beträgt.

4. Verbindungseinrichtung nach einem der Ansprüche 1 bis 3,
**dadurch gekennzeichnet,**
**dass** an dem Adapterelement (15; 15c) wenigstens ein erstes Rastelement (22) ausgebildet ist, das zusammen mit einem zweiten Rastelement (26) an dem Wischarm (12) eine Rastverbindung (28) ausbildet, und dass der Teilbereich (38; 38b; 38c) in Längsrichtung der Aufnahme (30) betrachtet bis in den Bereich des zweiten Rastelements (26) reicht.

5. Verbindungseinrichtung nach einem der Ansprüche 1 bis 4,
**dadurch gekennzeichnet,**
**dass** der Wischblattkörper (13) auf seiner Oberseite ein zweites Spoilerelement (51) aufweist, das zumindest im Wesentlichen über die gesamte Länge des Wischblattkörpers (13) verläuft, wobei im Bereich des Adapterelements (15; 15c) das zweite Spoilerelement (51) unterbrochen ausgebildet oder vom Adapterelement (15; 15c) überdeckt ist.

6. Verbindungseinrichtung nach einem der Ansprüche 1 bis 5,
**dadurch gekennzeichnet,**
**dass** das Adapterelement (15; 15c) des Wischblatts (11) im Bereich der Aufnahme (30) des Wischarms (12) Begrenzungsflächen (17; 17c, 18, 19) aufweist, die der Form der oberen Begrenzungsfläche (34) und der zwei seitlichen Begrenzungsflächen (32, 33) des Wischarms (12) derart angepasst sind, dass zwischen den Begrenzungsflächen (17; 17c, 18, 19) des Adapterelements (15; 15c) und der oberen Begrenzungsfläche (34) und den zwei seitlichen Begrenzungsflächen (32, 33) des Wischarms (12) zumindest bereichsweise eine formschlüssige Verbindung ausgebildet ist.

7. Verbindungseinrichtung nach einem der Ansprüche 1 bis 6,
**dadurch gekennzeichnet,**
**dass** der als erstes Spoilerelement (50) dienende Teilbereich (38; 38c) lediglich an einer seitlichen Begrenzungsfläche (32) angeordnet ist.

8. Verbindungseinrichtung nach einem der Ansprüche 1 bis 6,
**dadurch gekennzeichnet,**
**dass** der als erstes Spoilerelement (50b) dienende Teilbereich (38b) an beiden seitlichen Begrenzungsflächen (32, 33) angeordnet ist, und dass die beiden seitlichen Begrenzungsflächen (32, 33) identisch ausgebildet sind.

9. Verbindungseinrichtung nach Anspruch 4,
**dadurch gekennzeichnet,**
**dass** das zweite Rastelement (26) in Form eines Durchbruchs in der oberen Begrenzungsfläche (34) der Aufnahme (30) des Wischarms (12) ausgebildet ist.

10. Verbindungseinrichtung nach Anspruch 4 oder Anspruch 9,
**dadurch gekennzeichnet,**
**dass** das erste Rastelement (22) fluchtend zu einer Wischlippenebene (45) angeordnet ist.

11. Verbindungseinrichtung nach einem der Ansprüche 4 oder 9,
**dadurch gekennzeichnet,**
**dass** das erste Rastelement (22) seitlich versetzt zu einer Wischlippenebene (45) angeordnet ist.

12. Verbindungseinrichtung nach einem der Ansprüche 1 bis 11,
**dadurch gekennzeichnet,**
**dass**, die Breite (b) der oberen Begrenzungsfläche (34) zwischen 25% und 70% der Breite (B) der Aufnahme (30) beträgt.

## Revendications

1. Dispositif de raccordement (10 ; 10a ; 10b ; 10c) entre un bras (12) d'essuie-glace et un balai (11) d'essuie-glace, dans lequel le balai (11) d'essuie-glace comporte un corps (13) allongé de balai d'essuie-glace ayant un élément d'adaptateur (15 ; 15c) qui sert pour le raccordement avec possibilité d'échange à une zone de raccordement (25) du bras (12) d'essuie-glace,
dans lequel la zone de raccordement (25) du bras (12) d'essuie-glace comporte une monture (30) sensiblement en forme d'U pour l'élément d'adaptateur (15 ; 15c) avec une surface limite supérieure (34) et deux surfaces limites latérales (32, 33),
dans lequel la monture (30) chevauche l'élément d'adaptateur (15 ; 15c) au moins dans la zone des surfaces limites (32 à 34), et avec un premier élément de déflecteur (50 ; 50b) construit dans la zone de raccordement (25) du bras (12) d'essuie-glace pour augmenter la pression aérodynamique de contact du bras (12) d'essuie-glace sur le balai (11) d'essuie-glace,
**caractérisé en ce que** le premier élément de déflecteur (50 ; 50b) est structuré en tant que partie d'une surface limite latérale (32, 33) de la monture (30) du bras (12) d'essuie-glace par une zone partielle (38 ; 38b ; 38c) plate de la surface limite latérale (32, 33) placée obliquement par rapport à la direction incidente de la veine d'air, et
**en ce que** l'angle (α) de la zone partielle (38 ; 38b ; 38c) servant de premier élément de déflecteur (50 ; 50b) par rapport à un plan (40) parallèle à la surface limite supérieure (34) est compris entre 30° et 60°, de préférence à peu près 45°.

2. Dispositif de raccordement (10 ; 10a ; 10b ; 10c) entre un bras (12) d'essuie-glace et un balai (11) d'essuie-glace, dans lequel le balai (11) d'essuie-glace comporte un corps (13) allongé de balai d'essuie-glace ayant un élément d'adaptateur (15 ; 15c) qui sert pour le raccordement avec possibilité d'échange à une zone de raccordement (25) du bras (12) d'essuie-glace,
dans lequel la zone de raccordement (25) du bras (12) d'essuie-glace comporte une monture (30) sensiblement en forme d'U pour l'élément d'adaptateur (15 ; 15c) avec une surface limite supérieure (34) et deux surfaces limites latérales (32, 33),
dans lequel la monture (30) chevauche l'élément d'adaptateur (15 ; 15c) au moins dans la zone des surfaces limites (32 à 34), et avec un premier élément de déflecteur (50 ; 50b) construit dans la zone de raccordement (25) du bras (12) d'essuie-glace pour augmenter la pression aérodynamique de contact du bras (12) d'essuie-glace sur le balai (11) d'essuie-glace,
**caractérisé en ce que** le premier élément de déflecteur (50 ; 50b) est structuré en tant que partie d'une surface limite latérale (32, 33) de la monture (30) du bras (12) d'essuie-glace par une zone partielle (38 ; 38b ; 38c) plate de la surface limite latérale (32, 33) placée obliquement par rapport à la direction incidente de la veine d'air, et
**en ce que** la zone partielle (38 ; 38b ; 38c) en position oblique de la surface limite latérale (32, 33) est disposée sur le côté tourné vers la surface limite supérieure (34),
dans lequel la hauteur (h) de la zone partielle (38 ; 38b ; 38c) est comprise entre 20 % et 80 % par rapport à la hauteur (H) de la monture (30), de préférence à peu près 50 % de la hauteur (H) de la monture (30).

3. Dispositif de raccordement selon la revendication 2, **caractérisé en ce que** l'angle (α) de la zone partielle (38 ; 38b ; 38c) servant de premier élément de déflecteur (50 ; 50b) par rapport à un plan (40) parallèle à la surface limite supérieure (34) est compris entre 30° et 60°, de préférence à peu près 45°.

4. Dispositif de raccordement selon l'une quelconque des revendications 1 à 3, **caractérisé en ce que** sur l'élément d'adaptateur (15 ; 15c) est structuré au moins un premier élément d'encliquetage (22) qui constitue un raccord à encliquetage (28) avec un second élément d'encliquetage (26) sur le bras (12) d'essuie-glace, et **en ce que** la zone partielle (38 ; 38b ; 38c) s'étend jusqu'à la zone du second élément d'encliquetage (26) par rapport à la direction longitudinale de la monture (30).

5. Dispositif de raccordement selon l'une quelconque des revendications 1 à 4, **caractérisé en ce que** le corps (13) de balai d'essuie-glace comporte sur son côté supérieur un second élément de déflecteur (51), qui s'étend au moins sur sensiblement toute la longueur du corps (13) de balai d'essuie-glace,
dans lequel, dans la zone de l'élément d'adaptateur (15 ; 15c), le second élément de déflecteur (51) est structuré de façon à être interrompu ou est chevauché par l'élément d'adaptateur (15 ; 15c).

6. Dispositif de raccordement selon l'une quelconque des revendications 1 à 5, **caractérisé en ce que** l'élément d'adaptateur (15 ; 15c) du balai (11) d'essuie-glace comporte dans la zone de la monture (30) du bras (12) d'essuie-glace des surfaces limites (17 ; 17c, 18, 19), qui sont adaptées à la forme de la surface limite supérieure (34) et des deux surfaces limites latérales (32, 33) du bras (12) d'essuie-glace de telle sorte qu'est constitué un raccordement ajusté, au moins en parties, entre les surfaces limites (17 ; 17c, 18, 19) de l'élément d'adaptateur (15 ; 15c) et la surface limite supérieure (34) et les deux surfaces limites latérales (32, 33) du bras (12) d'essuie-glace.

7. Dispositif de raccordement selon l'une quelconque des revendications 1 à 6, **caractérisé en ce que** la zone partielle (38 ; 38c) servant de premier élément de déflecteur (50) n'est disposée que sur une seule surface limite latérale (32).

8. Dispositif de raccordement selon l'une quelconque des revendications 1 à 6, **caractérisé en ce que** la zone partielle (38b) servant de premier élément de déflecteur (50b) est disposée sur les deux surfaces limites latérales (32, 33), et
**en ce que** les deux surfaces limites latérales (32, 33) ont une structure identique.

9. Dispositif de raccordement selon la revendication 4, **caractérisé en ce que** le second élément d'encliquetage (26) est construit sous la forme d'une ouverture dans la surface limite supérieure (34) de la monture (30) du bras (12) d'essuie-glace.

10. Dispositif de raccordement selon la revendication 4 ou 9, **caractérisé en ce que** le premier élément d'encliquetage (22) est disposé dans l'alignement du plan (45) de lèvre d'essuie-glace.

11. Dispositif de raccordement selon la revendication 4 ou 9, **caractérisé en ce que** le premier élément d'encliquetage (22) est disposé en décalage latéral par rapport au plan (45) de lèvre d'essuie-glace.

12. Dispositif de raccordement selon l'une quelconque des revendications 1 à 11, **caractérisé en ce que** la largeur (b) de la surface limite supérieure (34) est comprise entre 25 % et 70 % de la largeur (B) de la monture (30).
